# EUROPÄISCHE PATENTSCHRIFT

(11) **EP 0 813 557 B1**
(45) Veröffentlichungstag und Bekanntmachung des Hinweises auf die Patenterteilung: **16.09.1998**
(21) Anmeldenummer: 96905826.2
(22) Anmeldetag: 29.02.1996
(51) Int. Cl.: C08F 12/04

(54) **FILTRIERBARE POLYSTYROL-DISPERSIONEN**
POLYSTYRENE DISPERSIONS CAPABLE OF BEING FILTERED
DISPERSIONS DE POLYSTYRENE POUVANT ETRE FILTREES

(30) Priorität: 06.03.1995 DE 19507777
(43) Veröffentlichungstag der Anmeldung: 29.12.1997
(73) Patentinhaber: BASF AKTIENGESELLSCHAFT, 67056 Ludwigshafen (DE)
(72) Erfinder: WÜNSCH, Josef, D-67105 Schifferstadt (DE); TUTTELBERG, Lembit, D-68305 Mannheim (DE); HEINRICH, Fritz, D-67061 Ludwigshafen (DE); BRAND, Siegbert, D-67346 Speyer (DE)
(86) Internationale Anmeldenummer: EP9600827
(87) Internationale Veröffentlichungsnummer: WO9627623

(56) Entgegenhaltungen:
- EP-A- 0 530 796
- FR-A- 2 137 676
- US-A- 4 942 209

## Beschreibung

Styrolpolymere werden vor allem für Verbraucherprodukte eingesetzt. Sie können dabei für sich allein oder in Form von Polymer-Blends mit anderen thermoplastischen Polymeren zur Herstellung von Werkstoffen mit vielen vorteilhaften Eigenschaften verwendet werden. Polystyrol zeichnet sich dadurch aus, daß es gegenüber einer Vielzahl von chemischen Verbindungen chemisch indifferent ist und sich ausgezeichnet verarbeiten läßt. Im allgemeinen hängen die physikalischen Eigenschaften und die äußere Form von Styrol-polymeren von der Methode ihrer Herstellung ab.

Die Erfindung bezieht sich auf ein Verfahren zur Herstellung von teilchenförmigem (z.B. in Form eines Latex oder Pulvers vorliegendem) Polystyrol durch anionische Polymerisation von Styrol, das in einem nicht-lösenden Kohlenwasserstoff dispergiert ist, wobei als Dispergiermittel ein spezielles Styrol-Butadien-Blockcopolymer eingesetzt wird.

Es besteht erhebliches Interesse an teilchenförmigen Polymeren. Dabei wird in einigen Fällen angestrebt, Polymere mit besonders enger Molekulargewichtsverteilung zu erhalten, die eine Partikelgröße von mehr als 200 µm aufweisen. Wie im U.S. Patent 4,247,434 beschrieben, werden Polymer-Mikropartikel in Latex-Form in zahlreichen Anwendungen eingesetzt, z.B. als Referenz-Standard für die Kalibrierung verschiedener Instrumente in der medizinischen Forschung. Von besonderem Interesse ist dabei wiederum Polystyrol in Teilchenform.

In der US-Patentschrift 3,645,959 wird die Herstellung von hochmolekularen Vinylpolymeren wie z.B. Polystyrol in nichtwäßriger Dispersion beschrieben. Dazu wird als Dispergiermittel bis zu einem Prozent eines Diolefins, wie z.B. Norbornadien zugesetzt.

In der US-Patentschrift 3,259,595 wird eine Polystyrol-Zubereitung ausgehend von einer Suspensions-Polymerisation beschrieben, welche zu einem Polymerfilms mit annähernd zellulärer Struktur verarbeitet werden kann.

In der US-Patentschrift 4,029,869 wird eine Methode zur herstellung von Polystyrol durch radikalische (durch Peroxid ausgelöste) Suspensions-Polymerisation beschrieben. Dabei werden sehr breite Molekulargewichtsverteilungen erhalten.

Die anionische Dispersionspolymerisation ermöglicht die Herstellung von Polystyroldispersionen mit enger Molekulargewichtsverteilung. Diese Methode ist z.B in der EP-Patentschrift 290 195 und den US-Patentschriften 4,942,209 und 4,871,814 beschrieben; dabei werden Styrol-Dien-Zweiblockcopolymere als Dispergiermittel verwendet.

Polystyrol-Partikel, welche mittels Dispersionspolymerisation anionisch mit Hilfe eines solchen Zweiblockcopolymeren hergestellt wurden, besaßen eine Partikelgröße von unter 15 µm und erwiesen sich als nicht filtrierbar, da solche Partikel selbst durch sehr feine Filtertücher nicht zurückgehalten werden und die versuchsweise eingesetzten Feinstfilter verstopften. Soweit es im Versuchsmaßstab gelang, solche feinen Polystyrol-Partikel aus der Dispersion zu gewinnen, ließen sich die erhaltenen Pulver leicht aufwirbeln, sodaß bei Gewinnung in technischem Umfang die Gefahr von Staubexplosionen bestanden hätte.

Es wurde nun gefunden, daß bei der anionischen Dispersionspolymerisation von Styrol durch Verwendung eines Styrol-Butadien-Styrol-(Drei)blockpolymeren als Dispergierhilfsmittel Polystyrol-Partikel mit einen Durchmesser von über 100, bevorzugt 200 bis 1000 µm gebildet werden, die sich als filtrierbar erwiesen haben. Solche Polystyrol-Dispersionen vermeiden die Gefahr einer Staubexplosion, da gegebenenfalls der erhaltene Filterkuchen unmittelbar zu einem Extrudat verarbeitet werden kann.

Unmittelbarer Erfindungsgegenstand ist ein Verfahren zur Herstellung von Polystyrol durch anionische Polymerisation von Styrol in nichtwäßriger Dispersion, die in einem aliphatischen Kohlenwasserstoff als Dispergiermedium und mit einem Styrol-Dien-Styrol-Dreiblockcopolymeren als Dispergierhilfsmittel vorgenommen wird.

Das erfindungsgemäß zu verwendende Styrol-Dien-Styrol-Dreiblockcopolymer wird z.B. in einer Menge von 0,1 bis 10 Gew.-%, bezogen auf Styrol verwendet, wobei der Dienblock hydriert oder unhydriert sein kann. Es sind geeignete Copolymere im Handel, mit denen die Erfindung ohne weiteres nachvollzogen werden kann.

Anstelle von Copolymeren mit Polybutadienblöcken können auch solche verwendet werden, die Polyisopren einpolymerisiert enthalten, wobei diese wiederum hydriert oder nicht hydriert sein können.

Als Dispergiermittel wird z.B. ein Alkan mit 4 bis 8 C-Atomen verwendet, bevorzugt ein Butan, Pentan oder Hexan oder ein Kohlenwasserstoffgemisch mit z.B. 4 bis 8 C-Atomen.

Die Polymerisationstemperatur beträgt i.a. 50 bis 100°C und die eingesetzte Dispersion enthält z.B. 20 bis 60 % Styrol.

Man wählt die Menge an Initiator in bekannter Weise derart, daß ein Molekulargewicht des herzustellenden Polystyrols von 5,000 bis 10,000,000 g/mol erzielt wird; die Methode ist somit hinsichtlich der gewinnbaren Molekulargewichte nicht beschränkt. Es ergibt sich, daß das erhaltene Polystyrol i. a. eine molekulare Uneinheitlichkeit (Verteilungsbreite des Molekulargewichts) M_{w}/Mₙ von weniger als 2 aufweist.

Nach dem erfindungsgemäßen Verfahren ist es möglich, auf anionischem Wege Polystyrol-Dispersionen zu erhalten, die filtrierbar sind. Während in dem bisher bekannten Verfahren, bei dem Styrol-Butadien-Zweiblockpolymere als Dispergiermittel eingesetzt werden, nur Teilchen mit einer Partikelgröße von weniger als 5 µm erhalten wurden, die Siebe oder Filtermaterialien verstopften, erzielt die Erfindung wesentlich größere Teilchen, die außerdem eine wünschenswert enge Molekulargewichtsverteilung (M_{w}/Mₙ bevorzugt unter 2) aufweisen. Aus den erfindungsgemäßen Dispersionen lassen sich durch Filtration leicht entsprechende Konzentrate (Latices), bei stärkerer Konzentrierung und, wenn die Herstellung von z.B. Extrudaten gewünscht wird, entsprechende Filterkuchen herstellen, die auch getrocknet werden können; dabei besteht nach Abtrennung des Dispergiermediums die Gefahr einer Staubexplosion nicht mehr.

Die Polymerisation kann beispielsweise wie folgt geschehen:

Ein Styrol-Butadien-Styrol-(Drei)blockpolymer, welches einen Styrolblock, einen nicht hydrierten oder einen hydrierten Butadien-Mittelblock und wiederum einen Styrolblock aufweist, wird zu einer ca. 0.5 - 20 Gew.-%igen Lösung - bezogen auf Styrol - in Styrol gelöst. Man kann ein handelsübliches Blockpolymer geeigneter Struktur, z.B. eine der unter dem Handelsnamen Kraton® G (Shell Chemie) erhältlichen Marken verwenden. Diese Lösung vermengt man mit z.B. Pentan und erwärmt auf z.B. 30°C. Nun werden mit einer verdünnten Lösung eines üblichen Initiators (z.B. sec-Butyllithium) alle Verunreinigungen austitriert, bis sich eine beständig gelbe Farbe einstellt. Dann wird die berechnete Menge an Initiator zugegeben und auf 65 bis 70°C Innentemperatur erwärmt. Man läßt auspolymerisieren (ca. 1 h) und bricht mit Methanol ab.

Die Dispersion kann durch Filtration vom Dispergiermedium befreit und die erhaltenen Partikel können i.v. getrocknet werden.

Wegen der sonstigen Einzelheiten der Methode der anionischen Dispersionspolymerisation kann auf die o.g. Druckschriften zu diesem Fachgebiet verwiesen werden.

Die erfindungsgemäß hergestellten Produkte können mit Polymeren, wie sie in "Kunststoff-Kompendium" von Franck und Biederbick, Vogel-Verlag, 1990 beschrieben sind, gemischt werden. Bevorzugt werden die erfindungsgemäß hergestellten Produkte mit Styrol-Polymeren und Styrol-Copolymeren gemischt. Beispiele hierfür sind S/B-Copolymere und Styrol-Butadien-Blockcopolymere (Zwei, Drei-, Vier oder Mehrblockcopolymere), wobei der Dien-Anteil auch hydriert sein kann. Anstelle von Butadien kann auch Isopren oder ein anderes 1,3-Dien verwendet werden. Bei den Styrol-Homopolymeren ist Standard-Polystyrol bevorzugt. Überraschenderweise wurde bei Abmischungen mit Standard-Polystyrol und den erfindungsgemäß hergestellten Produkten eine Verbesserung der mechanischen Eigenschaften gefunden. Das erfindungsgemäß hergestellte hochmolekulare Polystyrol ist mit den Standard-Polymeren gut verträglich und wirkt z.B. durch eine Verbesserung der Streckspannung, des E-Moduls und der Zähigkeit.

Die Mischungen werden in Lösungen oder mechanisch hergestellt (z.B. Extruder)

### Vergleichsversuch 2

Eine Mischung aus 50 Gew.-% Polystyrol 165 H der BASF AG und 50 Gew. Polystyrol 486 M werden in Toluol gelöst und mit Methanol ausgefällt und bei 110°C getrocknet. Anschließend wurden Prüfkörper bei 220°C Massetemperatur gespritzt und die Mischung auf ihr mechanisches Profil getestet. Aus dem Zugversuch nach ISO 527 erhielt man folgende Werte: Zug-E-Modul: 2346 MPa; Reißfestigkeit: 32 MPa; nom. Bruchdehnung: 30,9 %; Charpy-Schlagzähigkeit nach ISO 179/1eU 157,4.

### Beispiel 2:

Eine Mischung aus 40 Gew.-% Polystyrol 165 H der BASF AG und 50 Gew. Polystyrol 486 M und 10 Gew.-% des erfindungsgemäß hergestellten Polystyrols mit einem Molekulargewicht M_{w} = 1.000.000 g/mol (D=1,1) wird in Toluol gelöst und mit Methanol ausgefällt und bei 110°C getrocknet. Anschließend wurden Prüfkörper bei 220°C Massetemperatur gespritzt und die Mischung auf ihr mechanisches Profil getestet. Aus dem Zugversuch nach ISO 527 erhielt man folgende Werte: Zug-E-Modul: 2841 MPa; Reißfestigkeit: 47 MPa; nom. Bruchdehnung: 38,2 %; Charpy-Schlagzähigkeit nach ISO 179/1 eU 204,0.

### Beispiel 1

4.55 g eines unter der Bezeichnung Kraton^{®} G 1652 der Fa. Shell Chemicals handelsüblichen S-B-S-Copolymeren wurden unter Stickstoff in 182 g Styrol gelöst und in 330 g n-Hexan eingerührt. Alle Verunreinigungen wurden mit sec.-Butyllithium austitriert und die Polymerisation bei 26°C durch Zugabe von 0.73 mmol sec-Butyllithium gestartet. Die Temperatur wurde auf 63°C einreguliert und die Mischung 90 Minuten bei dieser Temperatur belassen. Zum Abbruch der Reaktion wurde Isopropanol im Überschuß (10 ml) zugegeben. Die erhaltene Dispersion wurde mittels eines Glasfilters D4 (Porengröße 10 -16 µm, Hersteller Schott, Mainz) filtriert und im Vakuumtrockenschrank bei 65°C für 12 Stunden getrocknet. Der Umsatz war über 99%. Eine Probe wird in Immersionsöl aufgeschlämmt und zwischen zwei Deckplättchen im durchscheinenden Licht unter dem Mikroskop (Zeiss Axiophot) untersucht; die Teilchen hatten eine Größe zwischen ca. 350 und 700 µm, M_{w}, ermittelt durch Gelpermeationschromatographie, 250,000 g/mol. M_{w}/Mₙ = 1.19.

### Vergleichsversuch 1

4.55 g eines unter der Bezeichnung Nippon® NS 312S der Fa. Nippon Zeon handelsüblichen S-B-Zweiblockcopolymers wurden unter Stickstoff in 182 g Styrol gelöst und in 330 g n-Hexan eingerührt. Nach Austitrieren der Verunreinigungen mit sec.-Butyllithium wurde die Polymerisation bei 26°C durch Zugabe von 1.82 mmol sec.Butyllithium gestartet und weiter wie vorstehend verfahren. Die Dispersion erwies sich als nicht filtrierbar; man ließ absitzen, dekantierte ab und trocknete im Vakuumtrockenschrank bei 65°C für 12 Stunden. Der Umsatz war über 99%; die Teilchengröße betrug ca. 6 µm, M_{w}: 140,000 g/mol; M_{w}/Mₙ: 1.16.

## Patentansprüche

1. Verfahren zur Herstellung von Polystyrol durch anionische Polymerisation von Styrol in nichtwäßriger Dispersion, dadurch gekennzeichnet, daß man die Polymerisation in einem aliphatischen Kohlenwasserstoff als Dispergiermittel und mit einem Styrol-Dien-Styrol-Dreiblockcopolymeren als Dispergierhilfsmittel vornimmt.

2. Verfahren nach Anspruch 1, dadurch gekennzeichnet, daß man das Styrol-Dien-Styrol-Dreiblockcopolymer in einer Menge von 0.1 bis 10 Gew.-%, bezogen auf Styrol verwendet.

3. Verfahren nach Anspruch 1 oder 2, dadurch gekennzeichnet, daß das Blockcopolymere Polybutadien oder Polyisopren einpolymerisiert enthält und das Dienpolymer hydriert oder nicht hydriert ist.

4. Verfahren nach Anspruch 1, dadurch gekennzeichnet, daß man als Dispergiermedium ein Alkan mit 4 bis 8 C-Atomen verwendet.

5. Verfahren nach Anspruch 4, dadurch gekennzeichnet, daß man ein Butan, Pentan oder Hexan oder ein Gemisch von Alkanen mit 4 bis 8 C-Atomen verwendet.

6. Verfahren nach Anspruch 1, dadurch gekennzeichnet, daß die Polymerisationstemperatur 50 bis 100°C beträgt.

7. Verfahren nach Anspruch 1, dadurch gekennzeichnet, daß eine Dispersion eingesetzt wird, die 20 bis 60 Gew.-% Styrol enthält.

8. Verfahren nach Anspruch 1, dadurch gekennzeichnet, daß eine Menge an Initiator verwendet wird, die einem Molekulargewicht des herzustellenden Polystyrols von 5,000 bis 10,000,000 g/mol entspricht.

9. Verfahren nach Anspruch 1, dadurch gekennzeichnet, daß die Verfahrensführung so gewählt wird, daß das erhaltene Polystyrol eine molekulare Uneinheitlichkeit (Verteilungsbreite des Molekulargewichts) M_{w}/Mₙ von weniger als 2 aufweist.

## Claims

1. A process for the preparation of polystyrene by anionic polymerization of styrene in nonaqueous dispersion, wherein the polymerization is carried out in an aliphatic hydrocarbon as the dispersing medium and with a styrene/diene/styrene three-block copolymer as the dispersant.

2. A process as claimed in claim 1, wherein the styrene/diene/styrene three-block copolymer is used in an amount of from 0.1 to 10% by weight, based on styrene.

3. A process as claimed in claim 1 or 2, wherein the block copolymer contains polymerized polybutadiene or polyisoprene and the diene polymer is hydrogenated or unhydrogenated.

4. A process as claimed in claim 1, wherein the dispersing medium used is an alkane of 4 to 8 carbon atoms.

5. A process as claimed in claim 4, wherein a butane, pentane or hexane or a mixture of alkanes of 4 to 8 carbon atoms is used.

6. A process as claimed in claim 1, wherein the polymerization temperature is from 50 to 100°C.

7. A process as claimed in claim 1, wherein a dispersion which contains from 20 to 60% by weight of styrene is used.

8. A process as claimed in claim 1, wherein the amount of initiator used corresponds to a molecular weight of from 5000 to 10,000,000 g/mol for the polystyrene to be prepared.

9. A process as claimed in claim 1, wherein the procedure is chosen so that the polystyrene obtained has a molecular nonuniformity (distribution width of the molecular weight) M_{w}/Mₙ of less than 2.

## Revendications

1. Procédé pour la préparation de polystyrène par polymérisation anionique de styrène en dispersion non aqueuse, caractérisé en ce qu'on procède à la polymérisation dans un hydrocarbure aliphatique à titre d'agent de mise en dispersion et avec un copolymère triséquencé de styrène-diène-styrène à titre d'adjuvant de mise en dispersion.

2. Procédé selon la revendication 1, caractérisé en ce qu'on utilise le copolymère triséquencé de styrène-diène-styrène en une quantité de 0,1 à 10% en poids rapportés au styrène.

3. Procédé selon la revendication 1 ou 2, caractérisé en ce que le copolymère séquencé contient du polybutadiène ou du polyisoprène à l'état incorporé par polymérisation, le polymère diénique étant présent sous forme hydrogénée ou non hydrogénée.

4. Procédé selon la revendication 1, caractérisé en ce qu'on utilise, à titre d'agent de mise en dispersion, un alcane contenant de 4 à 8 atomes de carbone.

5. Procédé selon la revendication 4, caractérisé en ce qu'on utilise un butane, un pentane ou un hexane ou encore un mélange d'alcanes contenant de 4 à 8 atomes de carbone.

6. Procédé selon la revendication 1, caractérisé en ce que la température de polymérisation s'élève de 50 à 100°C.

7. Procédé selon la revendication 1, caractérisé en ce qu'on met en oeuvre une dispersion qui contient du styrène à concurrence de 20 à 60% en poids.

8. Procédé selon la revendication 1, caractérisé en ce qu'on utilise une quantité d'initiateur qui correspond à un poids moléculaire du polystyrène à préparer de 5.000 à 10.000.000 g/mole.

9. Procédé selon la revendication 1, caractérisé en ce qu'on sélectionne le mode opératoire de telle sorte que le polystyrène obtenu présente une hétérogénéité moléculaire (plage de distribution du poids moléculaire) M_{w}/Mₙ inférieure à 2.
